# EUROPÄISCHE PATENTSCHRIFT

(11) **EP 2 241 771 B1**
(45) Veröffentlichungstag und Bekanntmachung des Hinweises auf die Patenterteilung: **19.12.2012**
(21) Anmeldenummer: 10159624.5
(22) Anmeldetag: 12.04.2010
(51) Int. Cl.: F16C 29/10, F16C 29/06, F16D 63/00, F16D 65/14

(54) **Linearachse**
Linear axis
Axe linéaire

(30) Priorität: 17.04.2009 DE 202009002076 U; 14.09.2009 DE 202009012485 U
(43) Veröffentlichungstag der Anmeldung: 20.10.2010
(73) Patentinhaber: RK Rose + Krieger GmbH Verbindungs- und Positioniersysteme, 32423 Minden (DE)
(72) Erfinder: Palm, Dieter, 33824 Werther (DE); Heinzel, Bernd, 32457 Porta Westfalica (DE); Malek, Raimund, 31749 Auetal 2 (DE)
(74) Vertreter: Dantz, Jan Henning

(56) Entgegenhaltungen:
- EP-A2- 0 936 366
- DE-A1- 4 116 795
- DE-A1- 19 715 014
- DE-A1-102005 016 719
- US-A1- 2005 183 907

## Beschreibung

Die Erfindung betrifft eine Linearachse mit mindestens einer vertikalen Führungsschiene und mit einem längs der Führungsschiene bzw. den Führungsschienen mittels eines Antriebs verfahrbaren, ein Gehäuse aufweisenden Führungsschlitten, wobei jeder Führungsschiene wenigstens ein mit einer Keilfläche versehener Bremskeil zugeordnet ist.

Die in Rede stehenden Linearachsen werden u.a. in Automatisierungsanlagen eingebaut. Üblicherweise sind derartige Linearachsen mit Führungsschlitten ausgerüstet, die längs eines räumlichen Koordinatensystems verfahren werden. Problematisch ist bei solchen Linearachsen das Verfahren in Richtung der sogenannten Z-Achse, die durch die vertikale Führungsschiene bzw. durch die vertikalen Führungsschienen bestimmt ist. Sofern die Linearachsen mit mehr als einer Führungsschiene ausgerüstet sind, verlaufen diese achsparallel zueinander.

Als Antriebe für die Führungsschlitten können die in der Antriebstechnik bewährten Bauelemente eingesetzt werden. Unabhängig von der Art des Antriebes müssen diese Antriebe so ausgelegt sein, dass der Führungsschlitten in jeder Stellung unabhängig und redundant von der Motorbremse gehalten wird.

Bei Wartungsarbeiten ist es üblich, die Führungsschlitten zusätzlich zu sichern, beispielsweise durch eine separate Fixierung über eine Hilfsvorrichtung bzw. störende Aufbauten außerhalb der Linearachse, wie z.B. eine Stütze. Diese Maßnahmen sind jedoch von der Handhabung her recht umständlich und erfüllen in ungenügender Weise die Sicherheitsvorschriften. Im Falle einer Betriebsunterbrechung, beispielsweise durch Energieausfall, fährt der Führungsschlitten ungebremst entlang der die Z-Achse bildenden Führungsschiene bzw. der Führungsschienen. Die Unfallgefahr ist in einem solchen Falle entsprechend hoch.

Aus der DE 197 15 014 A 1 (Figuren 4 bis 6) ist eine Linearführung bekannt, die mit auf die Führungsschienen einwirkenden Bremskeilen versehen ist. Die Bremskeile sind gegenüber der Führungsschiene ortsfest. Die Bremskraft für jeden Bremskeil wird durch einen mit einer Schrägfläche versehenen Schieber aufgebracht, der im Normalbetriebszustand von einem mit Druckluft beaufschlagten Kolben verfahrbar ist. Im Falle einer Betriebsunterbrechung werden Federn entspannt, die den Schieber in Richtung zum Kolben verfahren. Dadurch wird eine Bremskraft zwischen der Führungsschiene und dem Bremskeil erzeugt. Die auf den Bremskeil einwirkende Kraft wird dann durch den Schieber umgeleitet, d.h. sie verläuft dann senkrecht zur Führungsschiene. Die Bremsung erfolgt ausschließlich durch die Reibung zwischen der Führungsschiene und dem Bremskeil.

Aus der US 2005/0183907 A1 ist eine Linearführung bekannt, die mit einem Gehäuse ausgestattet ist. Ferner ist diese Linearführung mit zwei einander gegenüberliegenden Aktuatoren ausgestattet, die an einer Bremsfläche anliegen. Die gegenüberliegenden Flächen verlaufen schräg zur Anlagefläche. Im Normalbetriebszustand wird keine Bremskraft erzeugt, da über die Wirkung des Kolbens die Federn gespannt werden. Bei Abfall des Druckes in der Kammer werden diese Federn entspannt und die Rollen werden gegen die Aktuatoren mit einer bestimmten Kraft angedrückt. Auch bei dieser Linearführung werden die von dem Kolben und den Federn einwirkenden Kräfte umgeleitet, so dass auch die Bremskraft ausschließlich auf Reibung beruht.

Der Erfindung liegt die Aufgabe zugrunde, eine Linearachse der eingangs näher beschriebenen Art so zu gestalten, dass im Normalbetrieb der die Last tragende Führungsschlitten frei beweglich ist, dass jedoch im Falle einer Betriebsunterbrechung, beispielsweise bei Wartungs-, Reparaturarbeiten, einer Störung oder dergleichen, beispielsweise durch einen Energieausfall, der Führungsschlitten entweder gebremst noch weiter verfahren werden kann, dass jedoch auch im Bedarfsfalle der Führungsschlitten nach einem relativ kurzen Bremsweg in dieser Stellung verbleibt.

Die gestellte Aufgabe wird dadurch gelöst, dass jeder Bremskeil in der Längsrichtung der Führungsschiene derart verfahrbar ist, dass im Normalbetrieb jeder Bremskeil mittels eines Linearantriebes in eine Außerbetriebsstellung verfahren ist, und dass im Falle einer Betriebsunterbrechung der Linearantrieb wirkungslos und der Bremskeil mittels eines mechanischen Kraftspeichers in die Wirkstellung verfahrbar ist, und dass am Gehäuse des Führungsschlittens beidseitig jeder Führungsschiene jeweils eine Schrägfläche vorgesehen ist, die mit der Keilfläche des Bremskeiles in Wirkverbindung steht.

Unter dem Normalbetrieb wird verstanden, dass der Führungsschlitten längs der vertikalen Führungsschiene oder längs der vertikalen Führungsschienen gesteuert verfahrbar ist, während im Falle einer Betriebsunterbrechung der Führungsschlitten entweder gebremst verfahren oder in seiner Stellung verbleibt. Der Bremskeil könnte dann auch als Haltekeil bezeichnet werden, so dass eine Sicherung gegen unbeabsichtigtes Absenken gewährleistet ist, und zwar unabhängig und redundant von der Motorbremse des Antriebes für den Führungsschlitten.

Der Vorteil des Linearantriebes ist darin zu sehen, dass dieser im Normalbetrieb aktiviert ist und den Bremskeil in der wirkungslosen Position hält, während bei einer Betriebsunterbrechung oder einem Defekt der mechanische Kraftspeicher den Bremskeil in die Wirkstellung bzw. Brems- oder Haltestellung verfährt. Der mechanische Kraftspeicher ist demzufolge unabhängig von der Funktion des Antriebes für den Führungsschlitten oder von der Stromversorgung. Bei notwendigen Wartungsarbeiten an der Linearachse wird beispielsweise über einen Hauptschalter die die Linearachse aufweisende Anlage stromlos geschaltet. In diesem Falle wird auch der Linearantrieb wirkungslos, so dass der mechanische Kraftspeicher sich entspannen kann und den zugeordneten Haltekeil in die Wirkstellung verfährt.

Als Linearantriebe kommen die in der Antriebstechnik bekannten Ausführungen zum Einsatz. Bevorzugt kommt jedoch eine Kolbenzylindereinheit, vorzugsweise in Form eines Pneumatikzylinders in Betracht. Es können jedoch auch Elektrozylinder sowie hydraulische Kolbenzylindereinheiten und dergleichen eingesetzt werden.

Zur Minimierung der Teilevielfalt ist vorgesehen, dass an dem Gehäuse des Führungsschlittens beidseitig jeder Führungsschiene jeweils eine Schrägfläche vorgesehen ist, die mit der Keilfläche des Bremskeiles in Wirkverbindung steht. Beim Verfahren des Bremskeiles mittels des Kraftspeichers kommt dann die der Schrägfläche gegenüberliegende Fläche mit der Führungsschiene über die gesamte Länge in Kontakt.

Für die Funktion der Linearachse ist es vorteilhaft, wenn die im Normalbetrieb von jedem Linearantrieb auf den Bremskeil einwirkende Kraft größer ist als die von dem Kraftspeicher aufzubringende Kraft. Im Normalbetrieb ist die von jedem Linearantrieb auf den Bremskeil einwirkende Kraft als Dauerkraft anzusehen.

In bevorzugter Ausführung ist die Linearachse mit einer Führungsschiene oder mit zwei parallel und im Abstand zueinander stehenden Führungsschienen versehen. Um ein Kräftegleichgewicht zu erzielen, wenn mittels des mechanischen Kraftspeichers bei einer Betriebsunterbrechung der Haltekeil in die Wirkstellung verfahren wird, ist vorgesehen, dass zumindest einer Führungsschiene zwei einander gegenüberliegende Bremskeile zugeordnet sind.

In weiterer Ausgestaltung dieser Ausführung ist dann noch vorgesehen, dass zwischen den Schrägflächen des Gehäuses des Führungsschlittens und den Schrägflächen der Bremskeile jeweils eine aus mehreren beabstandeten Rollen oder Nadeln gebildete Rollenführung vorgesehen ist. Dadurch wird sinngemäß ein Linearwälzlager geschaffen, so dass sichergestellt ist, dass jeder Bremskeil auch durch den sich entspannenden mechanischen Kraftspeicher mit minimierten Reibkräften verfahrbar ist, so dass der Linearantrieb mit minimalen Axialkräften betrieben werden kann. Des Weiteren wird durch diese konstruktive Ausführung eine relativ große Brems- und Haltekraft erzeugt, bedingt durch die relativ große Differenz zwischen der Rollreibung und der Gleit- bzw. Haftreibung an den Kontaktflächen der Führungsschiene zum Bremsbelag. Ein weiterer Vorteil ist noch darin zu sehen, dass die Wirkungen der Bremskeile auch dann voll erhalten bleiben, wenn die einander kontaktierenden Flächen mit einem Film aus einem Schmierstoff versehen sind.

In weiterer Ausgestaltung ist noch vorgesehen, dass jeder Bremskeil aus einem Sockel und aus einem Bremsbelag besteht. Der Sockel liegt bei dieser Ausführung der zugeordneten Schrägfläche des Gehäuses des Führungsschlittens zugewandt und der Bremsbelag liegt an der der Führungsschiene zugewandten Seite. Der Bremsbelag ist aus einem üblichen Material mit einem entsprechenden Reibwert gefertigt. Damit sich der Bremsbelag auch bei relativ großen Kräften nicht vom Sockel löst, ist vorgesehen, dass er in einer Aussparung des Sockels eingesetzt ist.

Da die auf die Führungsschlitten einwirkenden Kräfte je nach Verwendungszweck unterschiedlich sind bzw. sich je nach dem Einsatz ändern, ist vorgesehen, dass die von dem Kraftspeicher auf den Bremskeil einwirkende Schubkraft einstellbar ist. Diese Einstellung beeinflusst außerdem die Reibkräfte zwischen der Führungsschiene und dem Bremsbelag. Der Kraftspeicher ist in bevorzugter Ausführung eine Druckfeder oder eine Gasfeder. Dies erfolgt beispielsweise durch eine stärkere Vorspannung des Kraftspeichers. Sofern der Kraftspeicher in bevorzugter Ausführung eine Druckfeder ist, wird durch Stellschrauben die Vorspannung verändert. Bei dieser Ausführung sind dann noch zwischen der zugeordneten Fläche des Gehäuses und den Schraubenköpfen Dämpfungsringe vorgesehen.

Zur Erleichterung der Montage der Bremskeile ist vorgesehen, dass in das Gehäuse der Linearachse Führungsstifte zum Fixieren jedes Bremskeiles eingesetzt sind. Dabei sind zweckmäßigerweise für jeden Bremskeil zwei im Abstand zueinander stehende Führungsstifte vorgesehen. Diese Führungsstifte stehen senkrecht zu den Gleitflächen für die Bremskeile.

Die Keilwinkel des Bremskeiles liegt unter 5 Grad.

In weiterer Ausgestaltung der vorliegenden Erfindung ist vorgesehen, dass auf jede Führungsschiene mindestens zwei Führungsschlitten aufgesetzt sind. Dadurch besteht dann die Möglichkeit, dass die von den Bremskeilen aufgebrachten Bremskräfte entsprechend der Anzahl der Führungsschlitten erhöht wird. Sofern jeder Führungsschlitten mit zwei Bremskeilen ausgestattet ist, ist die Anzahl der Bremskeile doppelt so hoch wie die Anzahl der Führungsschlitten. Man kann jedoch davon ausgehen, dass sich die Bremskräfte bei zwei Führungsschlitten nicht verdoppeln bzw. bei drei Führungsschlitten verdreifachen.

Es ist besonders vorteilhaft, wenn die Anzahl der Führungsschlitten eine gerade Zahl ist. Besonders vorteilhaft ist, dass die in Reihe angeordneten Führungsschlitten wechselweise spiegelbildlich zueinander angeordnet sind. Sofern zwei Führungsschlitten auf die Führungsschiene aufgesetzt sind, ergibt sich der große Vorteil, dass die Bremswirkung der Führungsschlitten in beiden Richtungen der Führungsschlitten wirksam werden kann bzw., dass die Bremswirkung sowohl beim Absenken als auch beim Anheben der Führungsschlitten erzeugt werden kann.

Besonders vorteilhaft ist, wenn beispielsweise zwei spiegelbildlich zueinander auf die Führungsschiene aufgesetzten Führungsschlitten im Falle einer Betriebsunterbrechung die Bremskeile eines Führungsschlittens in der Außerbetriebsstellung und die Bremskeile des anderen Führungsschlittens in die Wirkstellung gefahren sind.

In besonders vorteilhafter Weise ist das Gehäuse jedes Führungsschlittens im Querschnitt U-förmig gestaltet. An einer Seite ist dann das Gehäuse mit einer schlitzartigen Öffnung versehen, so dass das Gehäuse von dieser Seite aus eingesehen werden kann.

Ferner ist noch vorgesehen, dass der Verschiebeweg jedes Bremskeiles durch mindestens eine Einstellschraube justierbar ist. Diese Einstellschrauben liegen den Kraftspeichern gegenüber, so dass durch die Kraft der Kraftspeicher die Brems- bzw. Haltekraft entsprechend den jeweiligen Gegebenheiten einstellbar ist.

Gemäß einer weiteren Ausführungsform ist vorgesehen, dass jeder Führungsschlitten mit einem der Führungsschiene zugeordneten Bremskeil ausgestattet ist, und dass der Führungsschlitten quer zur Führungsschiene bewegbar ist. Je nach den Einsatzmöglichkeiten kann diese vereinfachte Ausführung ausreichend sein, um die Last zu halten bzw. gebremst zu bewegen. Dabei ist es dann vorteilhaft, wenn an der dem Bremskeil abgewandten Seite ein bewegliches Stützelement angebracht ist, welches zur Stabilisierung der Führungsschiene beiträgt, so dass eine Biegung der Führungsschiene ausgeschlossen werden kann, wenn der Bremskeil in die Wirkstellung gefahren wird. Außerdem kann ein baugleiches Gehäuse verwendet werden, bei dem der zweite Bremskeil durch das Stützelement ersetzt ist.

Bei den zuvor beschriebenen Ausführungen wird jeder Führungsschlitten in Richtung der Längsachse der Führungsschiene verfahren. In Umkehrung dieser Ausführung ist es jedoch auch denkbar, dass bei einer Linearachse der zuvor beschriebenen Art jeder Führungsschlitten fest bzw. ortsfest angeordnet ist, und dass jede Führungsschiene in ihrer Längsrichtung verfahrbar ist.

Anhand der beiliegenden Zeichnungen wird die Erfindung noch näher erläutert.

Es zeigen:
- Figur 1: eine erfindungsgemäße Linearachse in einer Teilansicht, den Füh- rungsschlitten zeigend
- Figur 2: die Brems- und Halteeinrichtung der erfindungsgemäßen Linearachse als Einzelheit im Halbschnitt
- Figur 3: eine Linearachse in einer zweiten Ausführung mit zwei auf eine Füh- rungsschiene aufgesetzten Führungsschlitten in Ansicht, teilweise auf- gebrochen
- Figur 4: eine der Figur 3 entsprechende Darstellung, bei der jedoch die Füh- rungsschlitten gegenüber der Ausführung nach der Figur 3 um 180° versetzt sind und
- Figur 5: die Linearachse in einer dritten Ausführung mit nur einem Bremskeil, in Ansicht teilweise aufgeschnitten.

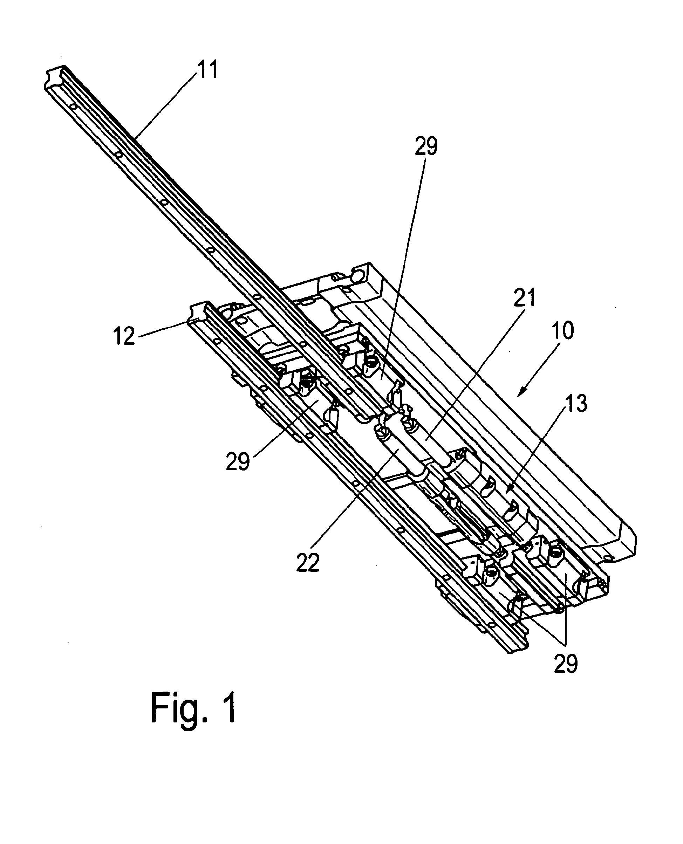

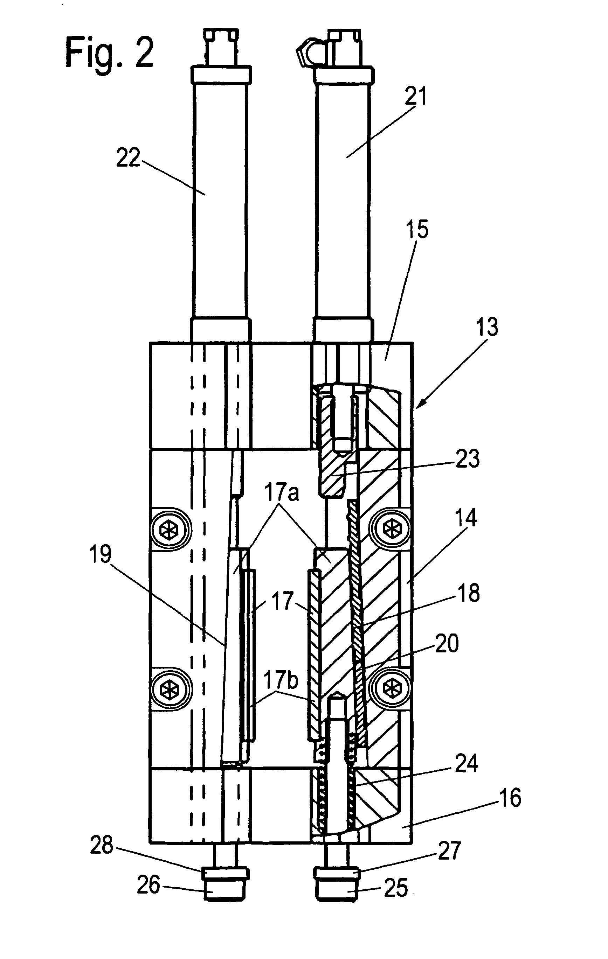

In der vereinfachten Darstellung ist in der Figur 1 die komplette Linearachse nicht dargestellt. Die Figur 1 zeigt den Führungsschlitten 10 der längs von zwei parallel und im Abstand zueinander stehenden Führungsschienen 11, 12 verfahrbar ist. Im dargestellten Ausführungsbeispiel ist der Führungsschiene 11 eine anhand der Figur 2 genauer erläuterte Brems- und Halteeinrichtung 13 zugeordnet. Im Gegensatz zu der dargestellten Ausführung könnte auch der Führungsschiene 12 noch eine Brems- und Halteeinrichtung 13 zugeordnet sein. Prinzipiell können mehrere Brems- und Halteeinrichtungen 13 eingesetzt werden.

Der in der Figur 1 dargestellte Führungsschlitten 10 ist so ausgelegt, dass jeder Führungsschiene 11, 12 zwei im Abstand zueinander stehende, nicht näher erläuterte Laufwagen 29 zugeordnet sind.

Die dieser Brems- und Halteeinrichtung 13 zugeordnete Laufschiene 11 ist gemäß der Figur 2 in diesem Bereich ebenfalls aus Gründen der vereinfachten Darstellung nicht gezeichnet. Der Führungsschlitten 11 wird in nicht näher dargestellter und erläuterter Weise von einem Antrieb längs der beiden Führungsschienen 11, 12 verfahren. Ein solcher Antrieb wäre beispielsweise ein Zahnriementrieb oder ein Spindeltrieb. Der Führungsschlitten 10 ist mit einem Gehäuse 14 ausgestattet, welches durch zwei einander gegenüberliegende Deckel 15, 16 geschlossen ist. Das Gehäuse 14 ist mit einer nutartigen Führung für zwei beidseitig der nicht dargestellten Führungsschiene angeordneten Bremskeilen 17 versehen. Die Bremskeile 17 werden in noch näher erläuterter Weise in ihrer Längsrichtung verschoben. Die beiden Bremskeile 17 sind an den einander abgewandten Seiten mit Schrägflächen 18 versehen. Parallel und im Abstand zu diesen Schrägflächen 18 ist das Gehäuse 14 ebenfalls mit Schrägflächen 19 versehen. Wie insbesondere der Halbschnitt gemäß der Figur 2 zeigt, ist zwischen den beiden beabstandeten Schrägflächen 18, 19 eine aus mehreren beabstandeten Nadeln oder Rollen gebildete Rollenführung 20 angeordnet.

Jeder Bremskeil 17 besteht aus einem Sockel 17a und einem Bremsbelag 17b. Wie die Figur 2 zeigt, stehen die Bremsbeläge 17b parallel und im Abstand zueinander.

Die Bremskeile 17 sind mit Linearantrieben in Form von Pneumatikzylindern 21, 22 antriebstechnisch gekoppelt. Die Kolben bzw. die Kolbenstangen dieser Pneumatikzylinder 21, 22 sind über Druckstücke 23 mit den Bremskeilen 17 gekoppelt. Die Pneumatikzylinder 21, 22 liegen in Aufwärtsrichtung des Führungsschlittens 10 gesehen vorn. An der gegenüberliegenden Seite wirkt auf jeden Bremskeil 17 ein Kraftspeicher in Form einer Druckfeder 24, der jedoch auch eine Gasfeder sein kann. Jede Druckfeder 24 kann zur Erzeugung einer unterschiedlichen Vorspannkraft mittels jeweils einer Einstellschraube 25, 26 ge- oder entspannt werden. Zwischen der Stirnfläche des Deckels 16 und den Köpfen der Einstellschrauben 25, 26 sind noch Dämpfungsringe 27, 28 vorgesehen, die beim Aktivieren der Druckfeder 24 ein schlagartiges Aufsetzen der Köpfe der Einstellschrauben 25, 26 verhindern.

Im Normalbetrieb, d.h., wenn die mit der Linearachse ausgerüstete Anlage in Funktion ist, werden die Pneumatikzylinder 21, 22 druckbeaufschlagt. Der Druck ist so eingestellt, dass die Bremskeile 17 in Richtung zu den Druckfedern 24 verfahren werden, da die von den Pneumatikzylindern 21, 22 aufgebrachten Kräfte größer sind als die Kräfte der vorgespannten Druckfedern 24. Die Bremskeile 17 sind in dieser Stellung wirkungslos. Wird jedoch beispielsweise die elektrische Versorgung der Anlage unterbrochen, werden die Pneumatikzylinder 21, 22 schlagartig drucklos. Durch die Entspannung der Druckfedern 24 werden die Bremskeile 17 in Richtung zu den Pneumatikzylindern 21, 22 verschoben.

Die Figur 2 zeigt dann deutlich, dass die Bremskeile 17 in radialer Richtung aufeinander zu bewegt werden und dass sie dann in Kontakt mit der jeweiligen Führungsschiene 11, 12 kommen. Wie die Figur 2 ferner zeigt, sind die Schrägungswinkel der Schrägflächen der Bremskeile 17 und des Gehäuses 10 relativ gering, so dass eine enorme Brems- oder Haltekraft aufgebracht wird. Die Spannung der Druckfedern 24 lässt sich über die Einstellschrauben 25, 26 so einstellen, dass die Bremskeile 17 nur mit einer solchen Kraft gegen die Führungsschiene 11 bzw. 12 gedrückt werden, so dass eine abgebremste Bewegung des Führungsschlittens 10 möglich ist. Außerdem kann die Einstellung so gewählt werden, dass es nach Zurücklegen eines minimalen Weges zum Stillstand des Führungsschlittens kommt. Die von den Bremskeilen 17 aufgebrachten Haltekräfte sind dann so groß, dass der Führungsschlitten 10 in seiner Position verbleibt. Die Linearachse wird in der Branche auch als Lineareinheit bezeichnet.

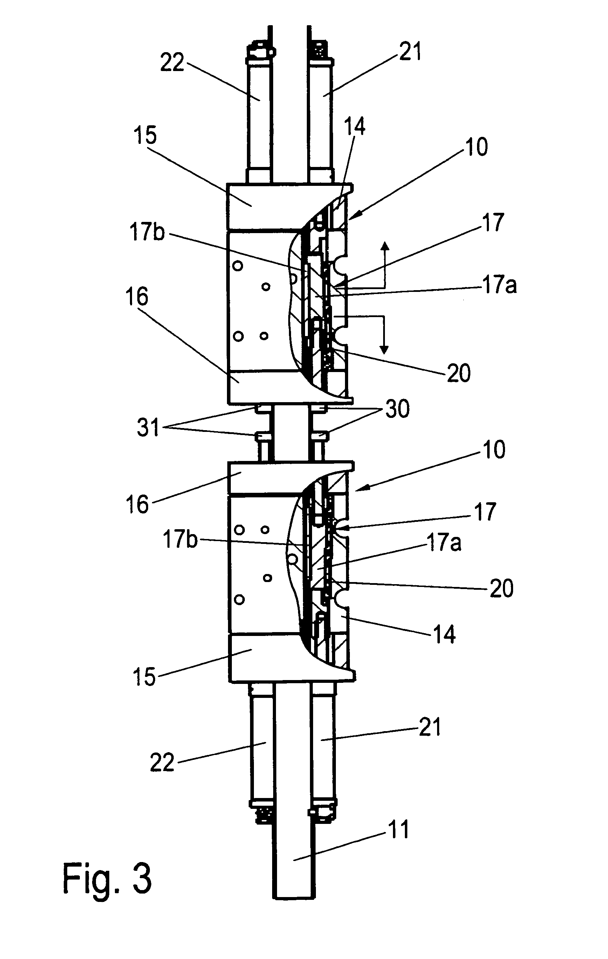

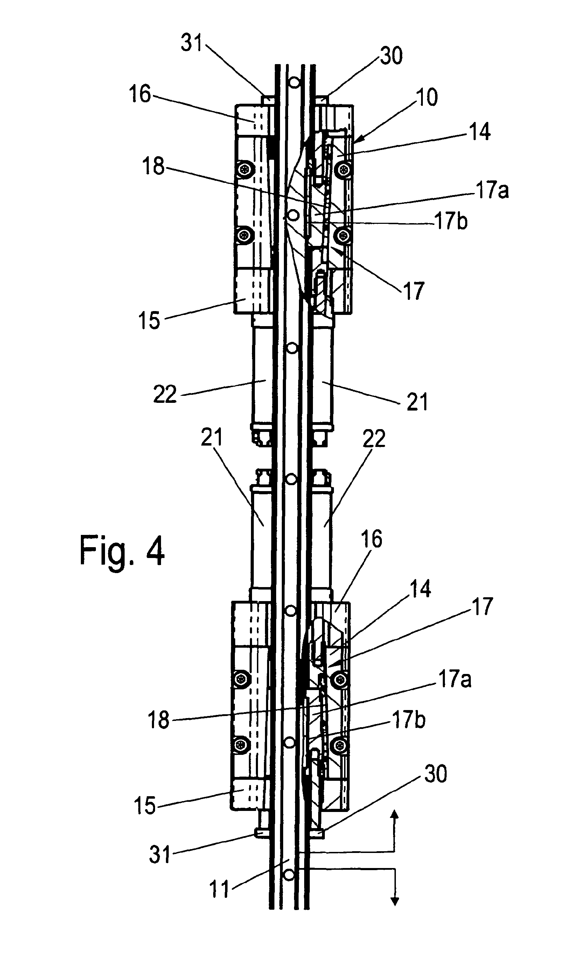

Die Figuren 3 und 4 zeigen eine Ausführung, bei der auf eine Führungsschiene 11 zwei Führungsschlitten 10 aufgesetzt sind, die spiegelbildlich zueinander stehen. Die Ausführung gemäß den Figuren 3 und 4 entspricht im Wesentlichen der Ausführung gemäß der Figur 2, jedoch sind auf die Kolbenstangen der Linearantriebe 21, 22 noch auf die Bremskeile 17 wirkende Druckstücke aufgesetzt. Ferner sind an den die Kraftspeicher 24 enthaltenden Bereiche Einstellschrauben 30, 31 vorgesehen, um den Verschiebeweg jedes Bremskeiles 17 zu justieren bzw. einzustellen. Bei der Ausführung gemäß der Figur 3 liegen die Linearantriebe 21, 22 an den einander abgewandten Seiten, sind jedoch spiegelbildlich angeordnet, wie die Figur zeigt.

Bei der Ausführung gemäß der Figur 4 sind die Führungsschlitten 10 baugleich zu den Führungsschlitten gemäß der Figur 3. Diese Führungsschlitten 10 sind jedoch wiederum spiegelbildlich zueinander angeordnet, die Linearantriebe 21, 22 liegen jedoch an den einander zugewandten Seiten, so dass die Einstellschrauben 30, 31 an den einander abgewandt liegenden Seiten vorgesehen sind.

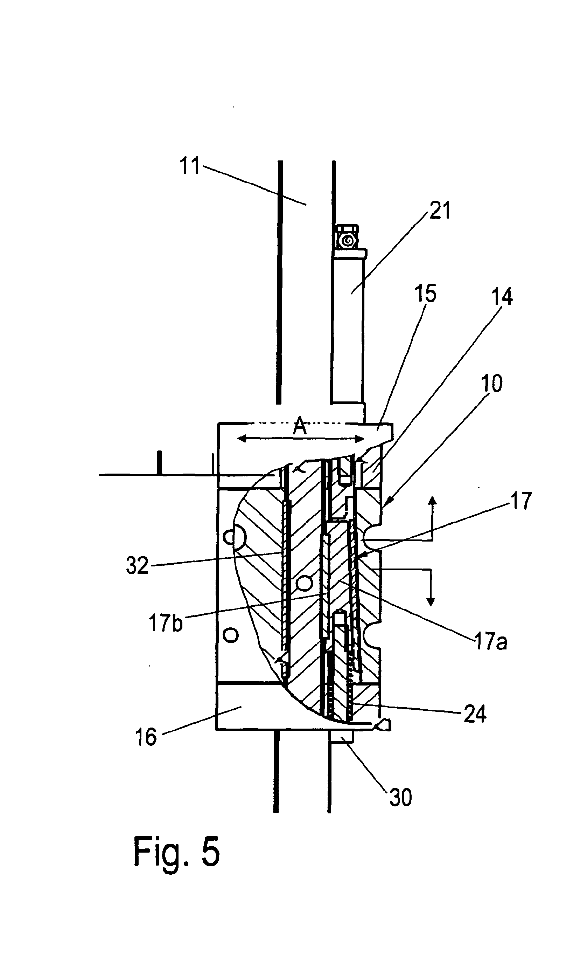

Bei der Ausführung gemäß der Figur 5 ist die Linearachse mit einem Führungsschlitten 10 ausgerüstet, der mit nur einem Bremskeil 17 ausgestattet ist, der an einer Seite der Führungsschiene 11 liegt. An der gegenüberliegenden Seite ist der Führungsschiene 11 ein Stützelement 32 zugeordnet, welches ein Schwimmsattel sein kann. Im Gegensatz zu der dargestellten Ausführung könnten auch auf die Führungsschiene 11 mehrere Führungsschlitten 10 aufgesetzt sein, die in Reihe angeordnet sind, und bei der zwei aufeinander folgende Führungsschlitten 10 wiederum spiegelbildlich zueinander gesetzt sind. Bei dieser Ausführung bewegt sich der Führungsschlitten 10 von der Führungsschiene 11 weg, wenn der Bremskeil 17 in die Wirkstellung verfahren wird, und er bewegt sich in die entgegengesetzte Richtung, d.h. hin zur Führungsschiene 11, wenn der Bremskeil 17 in die Lösestellung gefahren wird, wie durch den Doppelpfeil A angedeutet.

Entgegen den beschriebenen Ausführungen, bei denen jede Führungsschiene 11, 12 ortsfest ist, und die Führungsschlitten 10 in deren Längsrichtung verfahren wird, könnte in der Umkehrung auch die Führungsschiene 11 verfahren werden und der Führungsschlitten 10 bzw. die Führungsschlitten 10 sind ortsfest angeordnet.

Die Erfindung ist nicht auf das dargestellte Ausführungsbeispiel beschränkt. Wesentlich ist, dass jeder Führungsschiene 11, 12 mindestens ein Bremskeil 17 zugeordnet ist, dass jedoch vorzugsweise beidseitig jeder Führungsschiene 11, 12 jeweils ein Bremskeil 17 angeordnet ist. Im Normalbetrieb einer mit der Linearachse ausgerüsteten Anlage wird jeder Bremskeil 17 mittels des Linearantriebes in Form eines Pneumatikzylinders 21, 22 so positioniert, dass die Bremskeile unwirksam werden. Kommt es jedoch zu einer Betriebsunterbrechung, werden die Druckfedern 24 entspannt und die Bremskeile 17 kontaktieren die jeweilige Führungsschiene 11, 12.

## Patentansprüche

1. Linearachse mit mindestens einer vertikalen Führungsschiene (11, 12) und mit einem längs der Führungsschiene (11) bzw. den Führungsschienen (11, 12) mittels eines Antriebes verfahrbaren, ein Gehäuse (14) aufweisenden Führungsschlitten (10), wobei jeder Führungsschiene (11, 12) wenigstens ein mit einer Keilfläche versehener Bremskeil (17) zugeordnet ist, **dadurch gekennzeichnet, dass** jeder Bremskeil (17) in Längsrichtung der Führungsschiene (11, 12) derart verfahrbar ist, dass im Normalbetrieb jeder Bremskeil (17) mittels eines Linearantriebes (21, 22) in eine Außerbetriebsstellung verfahrbar ist, und dass im Falle einer Betriebsunterbrechung jeder Linearantrieb (21, 22) wirkungslos und der Bremskeil (17) mittels eines mechanischen Kraftspeichers (24) in die Wirkstellung verfahrbar ist, und dass am Gehäuse (14) des Führungsschlittens (10) beidseitig jeder Führungsschiene (11, 12) jeweils eine Schrägfläche vorgesehen ist, die mit der Keilfläche des Bremskeiles (17) in Wirkverbindung steht.

2. Linearachse nach Anspruch 1, **dadurch gekennzeichnet, dass** die im Normalbetrieb von jedem Linearantrieb (21, 22) auf den jeweiligen Bremskeil (17) einwirkende Kraft größer ist als die von dem Kraftspeicher (24) aufgebrachte Kraft.

3. Linearachse nach Anspruch 1, **dadurch gekennzeichnet, dass** zumindest einer Führungsschiene (11, 12) zwei einander gegenüberliegende Bremskeile (17) zugeordnet sind, und dass das Gehäuse (14) des Führungsschlittens (10) mit zu den Keilflächen jedes Bremskeiles (17) korrespondierenden Schrägflächen (19) versehen ist.

4. Linearachse nach Anspruch 3, **dadurch gekennzeichnet, dass** zwischen jeder Schrägfläche (19) des Gehäuses (14) und der Keilfläche des Bremskeiles (17) eine aus mehreren beabstandeten Rollen oder Nadeln gebildete Rollenführung (20) vorgesehen ist.

5. Linearachse nach einem oder mehreren der vorstehenden Ansprüche, **dadurch gekennzeichnet, dass** jeder Bremskeil (17) aus einem Sockel (17a) und einem Bremsbelag (17b) besteht, und dass jeder Bremsbelag (17b) in eine Aussparung des Sockels (17a) des Bremskeiles (17) eingesetzt ist.

6. Linearachse nach einem oder mehreren der vorstehenden Ansprüche, **dadurch gekennzeichnet, dass** die von jedem Kraftspeicher (24) auf den zugeordneten Bremskeil (17) einwirkende Kraft vorzugsweise mittels Einstellschrauben (25, 26) einstellbar ist, und dass zwischen den Kopf jeder Einstellschraube (25, 26) und der zugewandten Fläche des Gehäuses (14) jeweils ein Dämpfungsring (27, 28) angeordnet ist.

7. Linearachse nach einem oder mehreren der vorstehenden Ansprüche, **dadurch gekennzeichnet, dass** in das Gehäuse (14) Führungsstifte zur Fixierung jedes Bremskeiles (17) fest eingesetzt sind.

8. Linearachse nach einem oder mehreren der vorstehenden Ansprüche, **dadurch gekennzeichnet, dass** der Bremskeil (17) als Haltekeil ausgebildet ist.

9. Linearachse nach einem oder mehreren der vorstehenden Ansprüche, **dadurch gekennzeichnet, dass** der Keilwinkel des Bremskeiles (17) unter 5 Grad liegt.

10. Linearachse nach einem oder mehreren der vorstehenden Ansprüche, **dadurch gekennzeichnet, dass** auf jede Führungsschiene (11) mindestens zwei Führungsschlitten (10) in einer Reihe aufgesetzt sind.

11. Linearachse nach Anspruch 10, **dadurch gekennzeichnet, dass** die in Reihe auf die Führungsschiene (11) aufgesetzten Führungsschlitten (10) wechselweise spiegelbildlich zueinander angeordnet sind, und dass zwei spiegelbildlich zueinander auf die Führungsschiene (11) aufgesetzte Führungsschlitten (10) im Falle einer Betriebsunterbrechung die Bremskeile (17) eines Führungsschlittens (10) in die Außerbetriebsstellung und die Bremskeile (17) des anderen Führungsschlittens (10) in die Wirkstellung gefahren sind.

12. Linearachse nach einem oder mehreren der vorstehenden Ansprüche, **dadurch gekennzeichnet, dass** jeder Führungsschlitten (10) mit einem der Führungsschiene (11) zugeordneten Bremskeil (17) ausgestattet ist, und dass der Führungsschlitten (10) quer zur Führungsschiene (11) bewegbar ist.

13. Linearachse nach Anspruch 12, **dadurch gekennzeichnet, dass** an der dem Bremskeil (17) abgewandten Seite ein bewegliches Stützelement (32) vorgesehen ist, und dass das Gehäuse (14) im Querschnitt U-förmig gestaltet ist.

14. Linearachse nach einem oder mehreren der vorstehenden Ansprüche, **dadurch gekennzeichnet, dass** der Verschiebeweg jedes Bremskeiles (17) durch mindestens eine Einstellschraube (30, 31) justierbar ist.

15. Linearachse mit den Merkmalen des Oberbegriffes des Anspruches 1, **dadurch gekennzeichnet, dass** bei einer Linearachse gemäß einem oder mehreren der Ansprüche 1 bis 20 jede Führungsschiene (11) in ihrer Längsrichtung verfahrbar ist, und dass jeder Führungsschlitten (10) ortsfest angeordnet ist.

## Claims

1. Linear axis having at least one vertical guide rail (11, 12) and having a guide carriage (10) which can be moved along the guide rail (11) or the guide rails (11, 12) by means of a drive and which has a housing (14), wherein each guide rail (11, 12) is assigned at least one brake wedge (17) provided with a wedge surface, **characterized in that** each brake wedge (17) can be moved in the longitudinal direction of the guide rail (11, 12) in such a way that, during normal operation, each brake wedge (17) can be moved by means of a linear drive (21, 22) into a non-operational position, and that, in the event of an interruption in operation, each linear drive (21, 22) is inactive and the brake wedge (17) can be moved into the active position by means of a mechanical force store (24), and **in that**, on the housing (14) of the guide carriage (10), at both sides of each guide rail (11, 12), there is provided in each case one oblique surface which is operatively connected to the wedge surface of the brake wedge (17).

2. Linear axis according to Claim 1, **characterized in that** the force exerted by each linear drive (21, 22) on the respective brake wedge (17) during normal operation is greater than the force imparted by the force store (24).

3. Linear axis according to Claim 1, **characterized in that** at least one guide rail (11, 12) is assigned two mutually opposite brake wedges (17), and **in that** the housing (14) of the guide carriage (10) is provided with oblique surfaces (19) corresponding to the wedge surfaces of each brake wedge (17).

4. Linear axis according to Claim 3, **characterized in that** a roller guide (20) formed from a plurality of spaced-apart rollers or needles is provided between each oblique surface (19) of the housing (14) and the wedge surface of the brake wedge (17).

5. Linear axis according to one or more of the preceding claims, **characterized in that** each brake wedge (17) is composed of a base (17a) and a brake pad (17b), and **in that** each brake pad (17b) is inserted into a cutout of the base (17a) of the brake wedge (17).

6. Linear axis according to one or more of the preceding claims, **characterized in that** the force exerted by each force store (24) on the associated brake wedge (17) can preferably be adjusted by means of adjustment screws (25, 26), and **in that** in each case one damping ring (27, 28) is arranged between the head of each adjustment screw (25, 26) and the facing surface of the housing (14).

7. Linear axis according to one or more of the preceding claims, **characterized in that** guide pins for the fixing of each brake wedge (17) are fixedly inserted into the housing (14).

8. Linear axis according to one or more of the preceding claims, **characterized in that** the brake wedge (17) is in the form of a holding wedge.

9. Linear axis according to one or more of the preceding claims, **characterized in that** the wedge angle of the brake wedge (17) is less than 5 degrees.

10. Linear axis according to one or more of the preceding claims, **characterized in that** at least two guide carriages (10) are mounted in an in-line configuration on each guide rail (11).

11. Linear axis according to Claim 10, **characterized in that** the guide carriages (10) which are mounted in an in-line configuration on the guide rail (11) are arranged mirror-symmetrically with respect to one another in an alternating manner, and **in that** two guide carriages (10) mounted mirror-symmetrically with respect to one another on the guide rail (11), in the event of an interruption in operation, the brake wedges (17) of one guide carriage (10) are moved into the non-operational position, and the brake wedges (17) of the other guide carriage (10) are moved into the active position.

12. Linear axis according to one or more of the preceding claims, **characterized in that** each guide carriage (10) is equipped with a brake wedge (17) assigned to the guide rail (11), and **in that** the guide carriage (10) is movable transversely with respect to the guide rail (11).

13. Linear axis according to Claim 12, **characterized in that** a movable support element (32) is provided on the side facing away from the brake wedge (17), and **in that** the housing (14) is U-shaped in cross section.

14. Linear axis according to one or more of the preceding claims, **characterized in that** the displacement travel of each brake wedge (17) can be adjusted by means of at least one adjustment screw (30, 31).

15. Linear axis having the features of the preamble of Claim 1, **characterized in that**, in the case of a linear axis according to one or more of Claims 1 to 20, each guide rail (11) is movable in its longitudinal direction, and **in that** each guide carriage (10) is arranged so as to be positionally fixed.

## Revendications

1. Axe linéaire avec au moins un rail de guidage vertical (11, 12) et avec un chariot de guidage (10) présentant un boîtier (14), déplaçable le long du rail de guidage (11) ou des rails de guidage (11, 12) à l'aide d'un entraînement, au moins un coin de freinage (17) pourvu d'une surface de coin étant associé à chaque rail de guidage (11, 12), **caractérisé en ce que** chaque coin de freinage (17) est déplaçable dans le sens longitudinal du rail de guidage (11, 12) de telle manière qu'en fonctionnement normal, chaque coin de freinage (17) soit déplaçable à l'aide d'un entraînement linéaire (21, 22) dans une position de non fonctionnement, et **en ce qu'**en cas d'interruption de fonctionnement, chaque entraînement linéaire (21, 22) n'agisse pas et le coin de freinage (17) soit déplaçable à l'aide d'un accumulateur de force mécanique (24) dans la position active, et **en ce que** respectivement une surface oblique qui est en liaison active avec la surface de coin du coin de freinage (17) est prévue sur le boîtier (14) du chariot de guidage (10) de part et d'autre de chaque rail de guidage (11, 12).

2. Axe linéaire selon la revendication 1, **caractérisé en ce que** la force agissant en fonctionnement normal de chaque entraînement linéaire (21, 22) sur le coin de freinage respectif (17) est supérieure à la force appliquée par l'accumulateur de force (24).

3. Axe linéaire selon la revendication 1, **caractérisé en ce que** deux coins de freinage (17) opposés sont associés à au moins un rail de guidage (11, 12) et **en ce que** le boîtier (14) du chariot de guidage (10) est pourvu de surfaces obliques (19) correspondant aux surfaces de coin de chaque coin de freinage (17).

4. Axe linéaire selon la revendication 3, **caractérisé en ce qu'**un guidage à rouleaux (20) formé de plusieurs rouleaux ou aiguilles espacées est prévu entre chaque surface oblique (19) du boîtier (14) et la surface de coin du coin de freinage (17).

5. Axe linéaire selon l'une ou plusieurs quelconques des revendications précédentes, **caractérisé en ce que** chaque coin de freinage (17) se compose d'un socle (17a) et d'une garniture de freinage (17b), et **en ce que** chaque garniture de freinage (17b) est insérée dans un évidement du socle (17a) du coin de freinage (17).

6. Axe linéaire selon l'une ou plusieurs quelconques des revendications précédentes, **caractérisé en ce que** la force agissant de chaque accumulateur de force (24) sur le coin de freinage associé (17) peut être réglée de préférence à l'aide de vis de réglage (25, 26), et **en ce que** respectivement un anneau amortisseur (27, 28) est disposé entre la tête de chaque vis de réglage (25, 26) et la surface tournée du boîtier (14).

7. Axe linéaire selon l'une ou plusieurs quelconques des revendications précédentes, **caractérisé en ce que** des tiges de guidage destinées à la fixation de chaque coin de freinage (17) sont fixement insérées dans le boîtier (14).

8. Axe linéaire selon l'une ou plusieurs quelconques des revendications précédentes, **caractérisé en ce que** le coin de freinage (17) est réalisé comme un coin d'arrêt.

9. Axe linéaire selon l'une ou plusieurs quelconques des revendications précédentes, **caractérisé en ce que** l'angle de coin du coin de freinage (17) est inférieur à 5°.

10. Axe linéaire selon l'une ou plusieurs quelconques des revendications précédentes, **caractérisé en ce qu'**au moins deux chariots de guidage (10) sont placés dans une rangée sur chaque rail de guidage (11).

11. Axe linéaire selon la revendication 10, **caractérisé en ce que** les chariots de guidage (10) placés en rangée sur le rail de guidage (11) sont disposés alternativement de manière inversée les uns par rapport aux autres, et **en ce que** deux chariots de guidage (10) placés de manière inversée l'un par rapport à l'autre sur le rail de guidage (11) déplacent les coins de freinage (17) d'un chariot de guidage (10) dans la position de non fonctionnement dans le cas d'une interruption de fonctionnement et les freins de freinage (17) de l'autre chariot de guidage (10) sont déplacés dans la position active.

12. Axe linéaire selon l'une ou plusieurs quelconques des revendications précédentes, **caractérisé en ce que** chaque chariot de guidage (10) est équipé d'un coin de freinage (17) associé au rail de guidage (11) et **en ce que** le chariot de guidage (10) est mobile transversalement au rail de guidage (11).

13. Axe linéaire selon la revendication 12, **caractérisé en ce qu'**un élément d'appui (32) mobile est prévu sur le côté éloigné du coin de freinage (17) et **en ce que** la section transversale du boîtier (14) est conçue en forme de U.

14. Axe linéaire selon l'une ou plusieurs quelconques des revendications précédentes, **caractérisé en ce que** la course de déplacement de chaque coin de freinage (17) peut être ajustée par au moins une vis de réglage (30, 31).

15. Axe linéaire présentant les caractéristiques du préambule de la revendication 1, **caractérisé en ce que** pour un axe linéaire selon l'une ou plusieurs quelconques des revendications 1 à 20, chaque rail de guidage (11) est déplaçable dans son sens longitudinal, et **en ce que** chaque chariot de guidage (10) est fixe.
